# EUROPEAN PATENT APPLICATION

(11) **EP 2 739 025 A1**
(43) Date of publication of application: **04.06.2014**
(21) Application number: 12382469.0
(22) Date of filing: 28.11.2012
(51) Int. Cl.: H04M 3/42, H04M 7/00, H04L 29/12, H04L 29/06

(54) **System and method of communication handling**

(71) Applicant: Telefonica S.A., 28013 Madrid (ES)
(72) Inventor: Velasco Benito, Daniel, 28013 MADRID (ES); Urien Pinedo, Jose, Luis, 28013 MADRID (ES); Pozo Munoz, Andrés, 28013 MADRID (ES)
(74) Representative: Carpintero Lopez, Francisco

(57) **Abstract**

System and method of communication handling in a communication network (1) that allows to integrate legacy voice and messages applications with Over-The-Top (OTT) Voice over Internet Protocol (VoIP) applications by comprising communication handling means (2) configured to route incoming calls to both legacy applications (4) and VoIP apps (10).

## Description

### FIELD OF THE INVENTION

The present invention relates to communication networks and, more particularly, to handling legacy and Voice over Internet Protocol connections in such networks.

### BACKGROUND OF THE INVENTION - RELATED ART

Legacy communication networks (also known as Telco networks) such as the Public Switched Telephone Network (PSTN) and the Public Land Mobile Network (PLMN) provide features such as voice, message and voicemail connections between users. These traditional services have recently being replicated by Voice over Internet Protocol (VoIP) applications (apps) installed on smartphones, personal computers, and many other electronic devices with Internet connectivity. VoIP apps rely on Internet protocols such as Session Initiation Protocol (SIP) for session negotiation, and Real Time Media (RTM) or Extensible Messaging and Presence Protocol (XMPP) for sending and receiving media data.

These VoIP applications are usually referred to as Over-The-Top (OTT) apps, since they rely on the connectivity service provided by a telecommunication network, but present no deep integration with said network. For this reason, VoIP apps do not benefit from the traditional legacy network features, such as public number addressing.

Different approaches have been taken to deal with VoIP apps and legacy devices integration. Some services use the legacy phone number of the user as an internal identifier of the VoIP app. In these services, VoIP is never routed to the legacy communication network, and there is no coordination between the VoIP service and the legacy network. This lack of coordination when VoIP and legacy services coexist in the same device can result in communication problems, such as calls in the VoIP apps being dropped or suspended by incoming calls in the legacy network. Also, the user reachability is conditioned to the app connectivity status to the OTT service provider.

Other OTT apps provide the user with a new phone number for the VoIP service. This new number can be used to receive calls originated in a legacy network and also to send communications to a legacy device connected to said network. However, the user needs to handle two different phone numbers, and cannot decide on which device or OTT app to receive an incoming call.

Finally, some OTT services provide partial integration between the VoIP and legacy service, by diverting incoming calls to a number routed to a VoIP provider. This integration is typically poor and unidirectional, and does not allow the user to identify themselves in outgoing VoIP calls using their original legacy phone.

Therefore, all the mentioned alternatives present a low degree of integration between the VoIP and legacy services, which prevents the user from using a single phone number and from deciding, at any given communication scenario, whether to use VoIP or legacy technology for an incoming or outgoing call, message or voicemail. Also this lack of coordination can result in apps and devices interfering with each other, and in operators and OTT companies billing twice for the same communication.

As a consequence, there is a need for a method and system capable of extending legacy telephone service to Over-The-Top Apps.

### SUMMARY OF THE INVENTION

The current invention solves the aforementioned problems by disclosing a method and system that integrates VoIP services in a traditional legacy telecommunication network (PSTN or PLMN), thus allowing users to receive or send calls and messages from both legacy devices and OTT VoIP apps indistinctly with the same phone number.

In a first aspect of the present invention, a system of communication handling in a legacy network (such as PSTN or PLMN), is disclosed. The network comprises legacy connection means adapted to be connected to legacy devices, and communication handling means which allow connection to OTT VoIP apps in smartphones, computers, or any other electronic device, through VoIP connection means comprised by the communication handling means. Both the legacy device and the OTT VoIP apps are registered in the network with the same subscriber identification, such as a telephone number, which can be the original telephone number of the legacy device in the network. Notice that any device with legacy connectivity is considered a legacy device for the purposes of the present invention, regardless of any additional connection capabilities it may present.

When a subscriber of the VoIP integration service receives a communication (for example, a voice call, a message, or a voicemail), the network is configured to route the incoming communication to the communication handling means. Then, the communication handling means route the incoming call to both the legacy device and to the VoIP apps, letting the user decide in which device and application he wants to receive the call. The communication handling means are configured to route communications to the legacy device through the legacy connection means of the network, and to the OTT VoIP apps through the VoIP communication means of the communication handling means after conversion in a SIP gateway.

Notice that depending on the communication scenario and on user and network configurations, the communication handling means can determine that incoming communications are routed only to the legacy device, only to the OTT VoIP apps, or to both. Notice also, that incoming communications can be routed to multiple legacy devices, if they share a same telephone number.

Preferably, the communication handling means are configured to perform communication routing to a plurality of OTT VoIP apps in a two-step forking process. In the first step, the incoming call is routed to the legacy device through the legacy network, and to all the OTT VoIP apps through a VoIP core. Then, at the VoIP core, the incoming call is routed separately to each of the OTT VoIP apps. If the communication is answered by the user in the at least one legacy device, then the communication handling means guarantee that the call is kept in the legacy communication network domain.

After the first call forking at the communication handling means, the legacy leg (that is, the communication routing towards the legacy device) generates an additional triggering at the communication handling means. To readily detect said retriggering, a prefix is preferably added to the phone number used by the incoming call.

Also preferably, the communication handling means are configured to determine the availability of the OTT VoIP apps, and only route the incoming communication to available VoIP apps depending on ongoing communications, the status of the application, device capabilities and user preferences. Also, the communication handling means are configured to determine routing paths and timings that avoid conflicts between the legacy leg (communication routing to the legacy device through the legacy network) and the VoIP leg (communication routing to the VoIP apps through the SIP gateway).

Preferably, communications converted at the SIP gateway are received again at the communication handling means, retriggering said communication handling means. In order to detect the communication retriggering the communication handling means, said communication handling means are preferably configured to add a prefix to the subscriber identifier (that is, the telephone number) of the called user.

For outgoing communication from an OTT VoIP app, the communication handling means are preferably configured to route the outgoing communication through the same network as legacy communications, also enforcing same operator policies as said legacy communications.

In order to avoid tromboning, that is, an unnecessary routing through the communication handling means if an incoming call is finally handled only in a legacy device (that is, there are no available OTT VoIP apps), the network and communication handling means are preferably configured to route the connection directly through the legacy connection means of the network without going through the communication handling means.

Also preferably, in order to allow communications handled by the legacy device and by the OTT VoIP apps to appear in a single history file, the system preferably comprises a common communication history that is accessible from both kinds of applications. The OTT VoIP apps are configured to access the communication history directly through a VoIP service, whereas the activity history of the legacy device is stored in the communication history through the communication handling means and the VoIP service.

In order to perform the provisioning process that allows a user to use a VoIP integration service provided by the invention, the system comprises a VoIP service in the VoIP domain and provisioning means in the legacy domain. The VoIP service and the provisioning means implement a combined provisioning process in the legacy and VoIP domains.

In the particular case of Short Message Service, incoming messages are also delivered to the legacy devices and the user apps through the communication handling means, preferably avoiding replicating the same SMS in the same device.

In a second aspect of the present invention, a method for communication handling in a legacy communication network is disclosed. For subscriber of the VoIP integration provided by the present invention, both a legacy device and one or more OTT VoIP apps share the same subscriber identifier (that is, the same telephone number). When an incoming connection (such as voice, message or voicemail) is sent to said subscriber identifier, the method comprises routing the incoming call to communication handling means with VoIP connectivity. From the communication handling means, the method comprises routing the incoming communication both to the legacy device and to the OTT VoIP apps. The legacy device routing is performed through legacy connection means of the legacy network, whereas the routing to the apps is routed through VoIP connection means of the communication handling means, after converting the incoming communication through a SIP gateway.

If there are more than one OTT VoIP apps to which the incoming communication is to be routed, a two-step forking method is used. In a first step, the incoming communication is routed in parallel to the legacy device and to a VoIP core. In a second step, the incoming communication is separately routed from the VoIP core to the plurality of OTT VoIP apps. If the communication is answered in a legacy device, then the call is kept in the legacy communication network domain.

Preferably, the method further comprises determining the availability of each OTT VoIP app, hence deciding to which app or apps route the communication depending on ongoing communications, the status of the application, device capabilities and user preferences. Also, the method comprises determining routing paths and timings that avoid conflicts between the legacy and the VoIP legs.

The method preferably comprises adding a prefix to the subscriber identifier of incoming calls being routed to the SIP gateway for their conversion. That way, when the converted communications retrigger the communication handling means, said retrigger is readily detected.

Also preferably, the method further comprises routing outgoing VoIP connections through the communication handling means and the legacy network, forcing the same operator policies as for outgoing legacy calls.

Preferably, the method also comprises an anti-tromboning technique. According to this technique, whenever there are no available OTT VoIP apps and therefore incoming communications are handled only by the legacy device, said incoming communications are routed directly to the legacy device through the network legacy connection means, without going through the communication handling means.

Preferably, the method comprises performing a provisioning process to enable the VoIP integration service to be applied to a user. This provisioning process is performed in the VoIP domain by a VoIP service, and by provisioning means in the legacy network domain.

In particular, incoming SMS are delivered through the communication handling means to the legacy device (through the legacy network) and to the apps (through the SIP gateway and the VoIP domain).

Advantageously, the present method and system enable users to make and receive phone calls and messages from both the legacy device and the OTT apps, selecting the most convenient communication technology or network (PSTN, PLMN or VoIP) in any given scenario. Additionally, a telecommunication operator or a third party can enable the user to make and receive phone calls from a VoIP app using the subscriber PLMN or PSTN number, interoperating with any VAS (Value Added Service), and avoiding any conflicts between the App and the legacy telco call. It also allows integrating both the legacy calls and the VoIP calls in a single operator charging policy.

These and other advantages will be clear in the light of the detailed description of the invention.

### BRIEF DESCRIPTION OF THE DRAWINGS

For the purpose of aiding the understanding of the characteristics of the invention, according to a preferred practical embodiment thereof and in order to complement this description, the following figures are attached as an integral part thereof, having an illustrative and non-limiting character:
Figure 1 shows a schematic of a particular embodiment of the system of the invention, as well as the devices and applications connected to said system in a typical operation scenario.
Figures 2 and 3 present a particular embodiment of the method of the invention for handling incoming calls.
Figure 4 and 5 show two particular embodiments of methods for unregistered applications to be attached to an ongoing call according to the present invention.
Figure 6 shows in greater detail the elements of a particular embodiment of the communication handling means for handling incoming calls.
Figure 7 is a schematic of a particular embodiment of the method of the invention for handling outgoing calls.
Figure 8 shows in greater detail the elements of a particular embodiment of the communication handling means for handling outgoing calls.
Figures 9 and 10 present a particular embodiment of the method of the invention for handling incoming and outgoing short messages.
Figure 11 is a diagram of a particular embodiment of the method of the invention, dealing with outgoing messages from apps.
Figure 12, 13, 14, 15 and 16 show particular embodiments of the present invention regarding communication history management.
Figure 17 present a particular embodiment of service provisioning according to the present invention.
Figure 18 is a diagram of a two-step forking procedure according to the method of the present invention.
Figures 19 and 20 show a communication handled by a legacy device with and without tromboning respectively.

### DETAILED DESCRIPTION OF THE INVENTION

The matters defined in this detailed description are provided to assist in a comprehensive understanding of the invention. Accordingly, those of ordinary skill in the art will recognise that variation, changes and modifications of the embodiments described herein can be made without departing from the scope and spirit of the invention.

Note that in this text, the term "comprises" and its derivations (such as "comprising", etc.) should not be understood in an excluding sense, that is, these terms should not be interpreted as excluding the possibility that what is described and defined may include further elements, steps, etc.

Also note that in this text, the term "OTT VoIP enabler" is used to refer to the communication handling means, in order to provide a greater clarity to the text. Additionally, it should be noted that the term "legacy device" refers to any electronic device with legacy connectivity (such as PLMN or PSTN), regardless of other capabilities and services provided by the device (for example, the term legacy device in this context includes smartphones with legacy connectivity but which also provide internet connections and VoIP services).

Finally note that a legacy device is considered to be any electronic device with legacy connectivity, regardless of any further capabilities. Therefore, a legacy device can further comprise VoIP apps. In that scenario, expressions such as "routing to the legacy device" and similar derivations, always refer to routing to the electronic device through its legacy connectivity means, regardless of any other communication being established with said device.

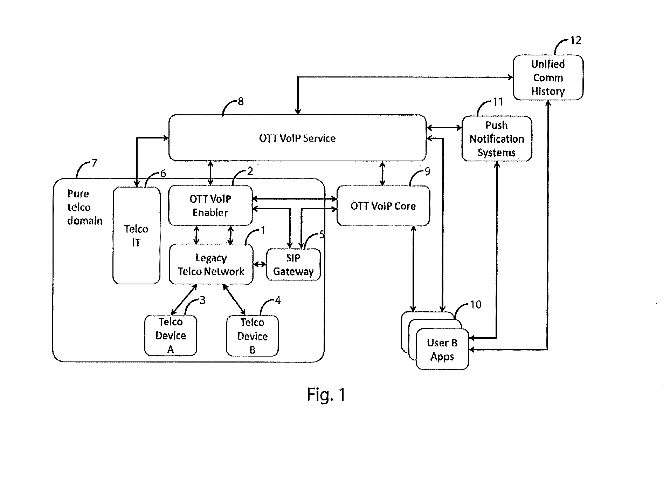

Figure 1 shows a schematic of a particular embodiment of the system of the invention, comprising a OTT VoIP enabler 2 which is adapted to be connected to a network 1 with legacy connectivity. For example, this network 1 can be a PLMN or PSTN network. The OTT VoIP Enabler 2 is connected to the legacy network 1 through legacy intelligent network protocols. In this example, two legacy devices are connected to the network 1: a first device 3, and a second device 4, being the user of the second device 4 the subscriber of the VoIP integration service provided by the present invention. The pure telecommunication domain 7 is completed by a SIP gateway 5 configured to convert connections between the legacy and VoIP standards, and a subscribers register 6. In order to apply the invention to electronic devices with VoIP apps 10, the system comprises an external OTT VoIP service 8, which orchestrates the steps of the communication handling process performed at the device and provides the VoIP integration service to the apps. Additionally, the electronic devices comprise a OTT VoIP core 9, which deals with SIP registration, call routing to and from the network 1, media transport, etc. Also, the system comprises an external Push notification system 11 and a unified command History 12, which stores historic information about the communications performed both through VoIP and legacy services.

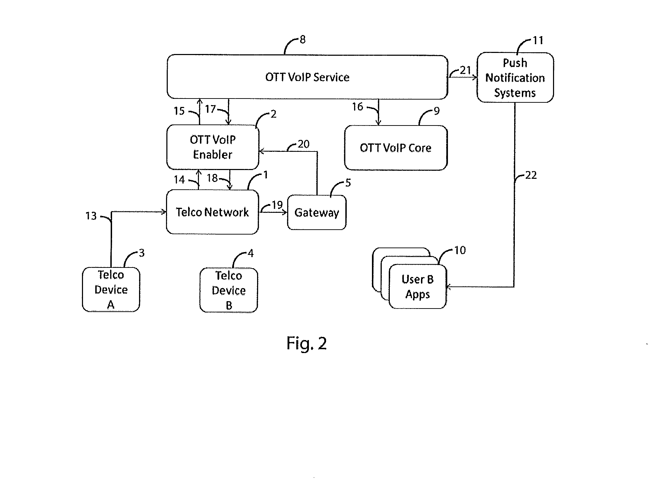

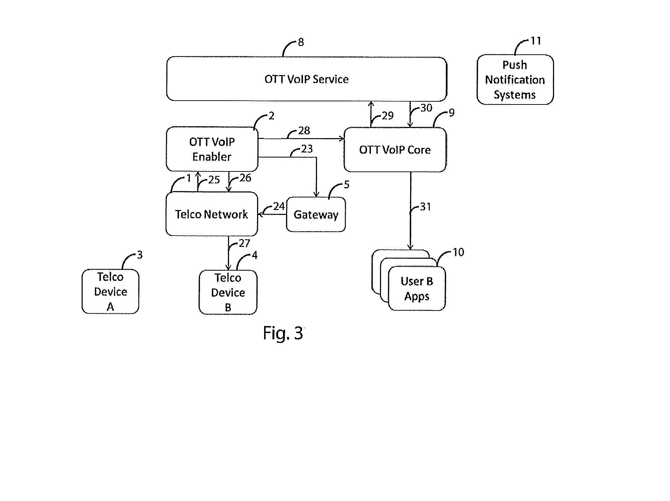

Figures 2 and 3 show the steps performed by the aforementioned elements of the particular embodiment of the system in order to handle an incoming call, according to a particular embodiment of the method of the invention:
- An incoming call for the second user 4 is received 13 from the first legacy device 3.
- Legacy network 1 triggers 14 OTT VoIP enabler 2 as a regular SVA (Value-added Service). This triggering is caused by the corresponding configuration in the called user profile.
- OTT VoIP enabler 2 notifies 15 OTT VoIP service 8 about the incoming call using a notification API (Application Programming Interface).
- OTT VoIP service 8 checks 16 in OTT VoIP core 9 the availability of the VoIP apps 10.
- OTT VoIP service 8 provides information 17 to the VoIP enabler 2 about how to handle the call, using notification API feedback primitives.
- Depending on the feedback received, or as a result of a timer expiration if no response is received in the previous step, OTT VoIP enabler 2 requests 18 to transfer the call to SIP domain by routing the call destination through the SIP Gateway 5. To handle retriggering, OTT VoIP enabler 2 overwrites redirecting information by including a prefix that lets OTT VoIP enabler 2 identify a retriggered call later in the signalling flow.
- SIP Gateway 5 receives 19 the incoming call and executes legacy to SIP control protocol conversion.
- SIP Gateway determines from the prefix added by the OTT VoIP enabler 2 that the communication has to be routed back 20 to the OTT VoIP enabler 2.

In parallel to step 17 (information provision by OTT VoIP service 8), the following steps are performed:
- OTT VoIP service 8 assigns 21 a unique ID (identifier) to the call (callld) and sends a Push notification to the App 10 using the corresponding Push Notification system 11.
- Push Notification system 11 forwards 22 the notification with the call ID to alert the apps 10 that the user has an incoming call. A push notification is an IP notification sent from a service to mobile communication devices, using the techniques provided by the mobile platform of the device (for example, iOS or android)

Once the call is in SIP domain, OTT VoIP enabler 2 decides if a first SIP forking is necessary. Depending if the call should be handled by the legacy device 4, by one or more VoIP apps 10, or both, the OTT VoIP enabler 2 created the required SIP legs. Accordingly, both legs can be created simultaneously, separately, or depending on the response of the other leg. The steps performed to connect to the legacy device 4 are the following:
- OTT VoIP enabler 2 requests 23 a new leg to be created through the SIP Gateway 5 to reach again the network 1. As OTT VoIP enabler 2 does not stay in the media path for the call, in case user answers on the legacy device 4, media goes through the SIP Gateway 5 entity but does not reach OTT VoIP Enabler 2 nor OTT VoIP core 9. This feature is called call tromboning elimination and provides the optimal path for the communication, as voice data does not get sent to the OTT domain unless necessary.
- SIP Gateway 5 injects 24 the call back in the legacy network 1 as a new call directed to the original called user 4.
- As this new call is directed to the called user 4 again, this causes the network 1 to trigger 25 again OTT VoIP enabler 2, as this is regarded as a new incoming call to that user 4.
- OTT VoIP enabler 2 detects 26 the retriggering -this is, that the call is already being managed in the system- based on redirecting information added to the call in step 23.
- The call is progressed 27 to the user legacy device 4.

The steps performed to connect to the VoIP apps 10 are the following:
- OTT VoIP enabler 2 requests 28 a new SIP leg to be created from the OTT VoIP enabler 2 to the OTT VoIP core 9.
- OTT VoIP core 9 notifies 29 OTT VoIP service about the call using OTT VoIP core 9 notification API.
- OTT VoIP service 8 requests 30, using a notification API primitive, to fork the call to the apps 10 reported as registered in the previous availability query.
- A SIP call leg is created 31 and reaches connected apps 10.

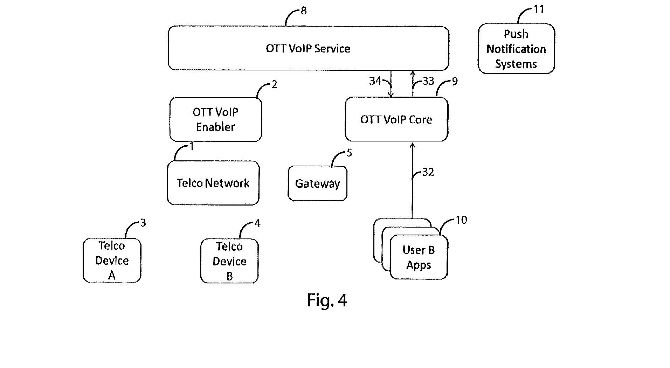

As a result of the previous steps, both the legacy device 4 and the apps 10 alert the user of the incoming call. In particular, unregistered apps 10 are alerted of the call by means of push notification, whereas registered apps 10 are alerted by legs created from the forking at the VoIP core 9. At this point, the user can decide whether to answer or reject the call in any of the devices and apps he is being alerted. By answering or rejecting the call in one of the devices or apps, the rest of the legs are cancelled. If the user decides to answer the call, said call progresses differently depending on which device or app it is handled:
- Legacy device 4 answers the call by standard legacy connectivity procedures. A message stating that the device 4 is answering the call is sent to the OTT VoIP enabler 2 as a SIP response converted from the legacy response by the SIP gateway.
- For registered apps 10, the call is answered by conventional SIP procedures. The OTT VoIP enabler 2 is notified of said answer by the OTT VoIP core 9.
- If the communication is answered by an unregistered app 10, said unregistered app generates a new SIP communication session towards the OTT VoIP core 9, as shown in figure 4. The new SIP communication session includes the call ID provided in the push notification, so the OTT VoIP core 9 is able to identify the communication as an answer to the incoming call. The OTT VoIP core 9 consequently attaches the new SIP communication session to the original call, and cancels the communications towards the rest of the apps.

The steps for answering the communication with an unregistered app 10 are shown in figure 4:
- When the user answers the call on the unregistered app 10, said app sends 32 a new communication request to a SIP addressing scheme built in the OTT VoIP core 9. The request includes the call ID of the original call.
- OTT VoIP service 8 is notified 33 about the incoming call.
- A request is sent 34 from the OTT VoIP service 8 to the OTT VoIP core 9 to connect the new communication to the original call received originally from the legacy network 1.

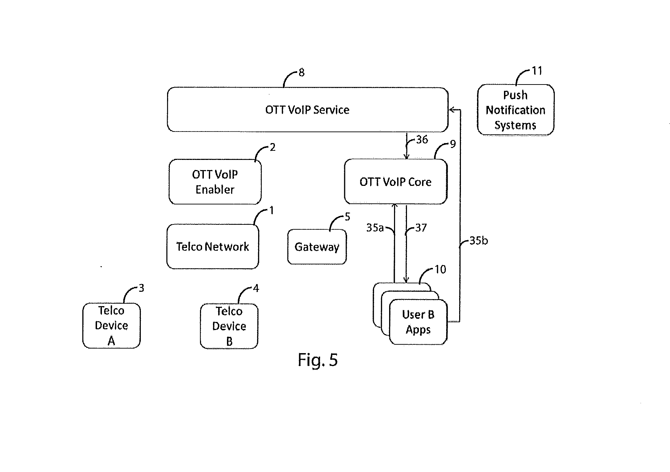

An alternative method for answering the call from an unregistered application is shown in figure 5:
- When the user answers the call on the unregistered app 10, said app 10 connects 35a to the VoIP domain, and when available, sends an HTTP (Hypertext Transfer Protocol) request 35b to notify OTT VoIP service8.
- OTT VoIP service 8 then requests 36 OTT VoIP core 9 to create a SIP leg to the app 10.
- The SIP leg is created 37 to the app 10, which automatically accepts the leg creation as it was previously accepted by the user when answered to the push notification. This step is therefore transparent to the user

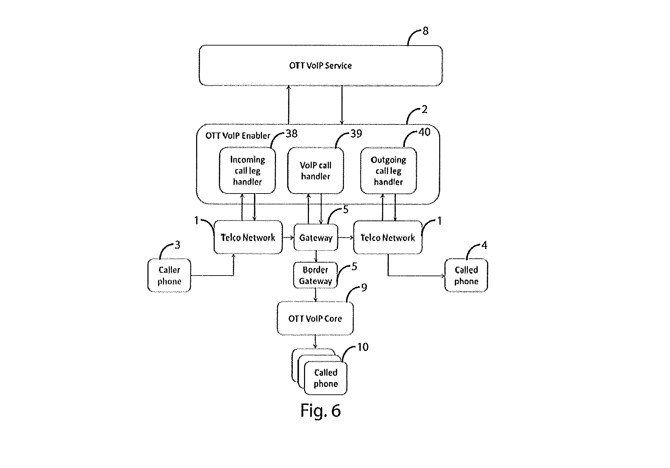

Figure 6 presents a logical subdivision of the OTT VoIP enabler 2 according to the different stages of the call handling:
- Incoming call leg handler 38, which manages legacy intelligent network standards to interact with the legacy network, checks API subscription status, generates API notifications, and handles OTT VoIP service 8 requests.
- VoIP call handler 39, which manages SIP incoming legs to correlate them with previously transferred calls to SIP domain, undoes media tromboning if required, and forks the call back to the legacy and/or OTT VoIP networks.
- Outgoing call leg handler 40, which manages retriggered leg by means of legacy intelligent network standards, and is responsible to recover original call information in case it is missed in the information flow after domain transfer.

Different control protocols can be used to implement the described interaction between the OTT VoIP enabler 2 and the legacy communications core, such as CAMEL (Customized Application for Mobile Network Enhanced Logic).

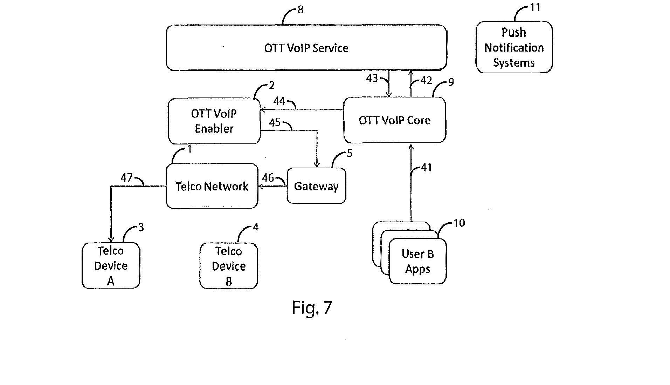

The data flow for outgoing calls from VoIP apps 10 is presented in figure 7:
- VoIP app sends 41 a request to create a call in the OTT VoIP core 9.
- Call request from the app 10 is notified 42 to OTT VoIP service 8, which decides the proper handling for the call.
- OTT VoIP service 8 requests 43 OTT VoIP core 9 to route the call to the communication network 1 using a notification API.
- The Call is routed 44 though OTT VoIP enabler 2 to enforce operator policies, such as applying white/black lists for called numbers or user suspension, and to execute any originating service of the calling user.
- OTT VoIP enabler 2 forwards 45 the call to VoIP Gateway 5 to be injected in the communication network 1. Additionally, some identifier can be added to the call, such as a prefix to the called party, in order to request further processing in the communication network 1 (for example, triggering other services).
- The call is converted 46 from SIP to legacy protocol and then routed to the destination party by conventional means.
- Finally, the call is delivered 47 to destination.

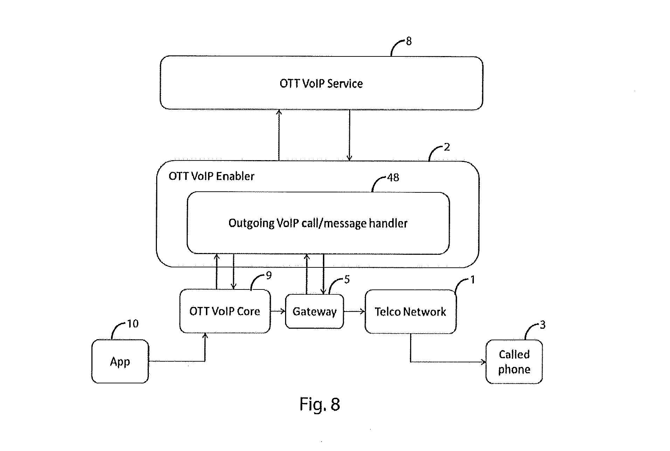

As seen in figure 8, the logic of the OTT VoIP enabler 2 for outgoing calls is not split, and is performed completely by an Outgoing VoIP call/message handler 48, since all the handling is done in SIP.

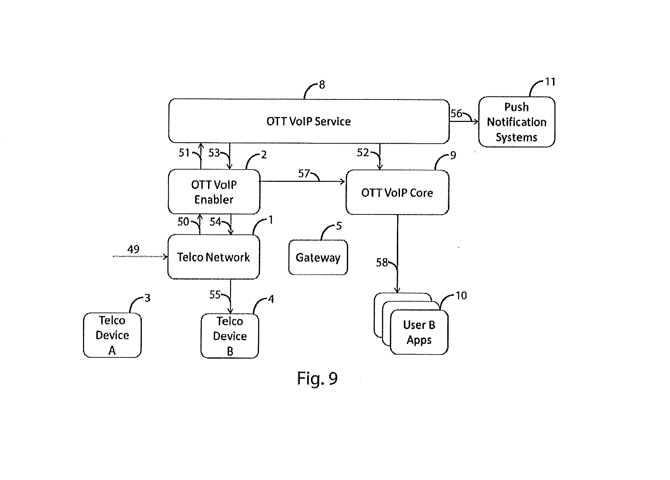

The procedure for handling incoming SMS (Short Message Service) towards the user of the legacy device 4 is shown in figure 9:
- A user sends 49 a SMS to a user that is a subscriber of the VoIP integration service provided by the present invention. The message gets to the legacy network through standard procedures, such as being received at the SMSC (Short Message Service Center) by SMPP (Short Message Peer-to-Peer Protocol) interconnection.
- Message is routed 50 to the OTT VoIP enabler 2 by means of some configuration in the user profile of a network entity dealing with SMS management (such as the 'alternate delivery' feature in SMSC).
- Message is notified 51 to OTT VoIP service 8, which decides what the correct management for that message is.
- OTT VoIP service 8 requests 52 OTT VoIP core 9 the availability of the user's apps 10 in order to make a decision about the delivery technology for that message.
- OTT VoIP service 8, using notification API primitives, provides 53 information to the OTT VoIP enabler 2 about how to handle the message and which technology or technologies should be used to deliver the message.
- If the OTT VoIP service 8 decides that the message has to be delivered to the user by standard legacy procedures, the OTT VoIP enabler forwards 54 the message to the legacy Network (eg. using SMPP protocol with the SMSC) for delivering it to the user in his legacy device 4. Other alternative is to deliver the message to the apps 10 first and, just in case of failure, then let the SMS progress in the network 1 towards the legacy device 4.
- SMS is delivered 55 to user phone.
- For those apps 10 not available, a Push Notification is requested 56. This step is performed in parallel to steps 53 to 55.
- If the OTT VoIP service 8 instructs the OTT VoIP enabler 2 to deliver the message to the user's apps 10 transported over VoIP core 9 (as part of step 53), the OTT VoIP enabler 2 converts the message to a new protocol, if necessary, and forwards 57 the message towards VoIP core 9.
- The message is forked 58 at the OTT VoIP core 9 to all the OTT VoIP apps 10 registered in said OTT VoIP core 9.

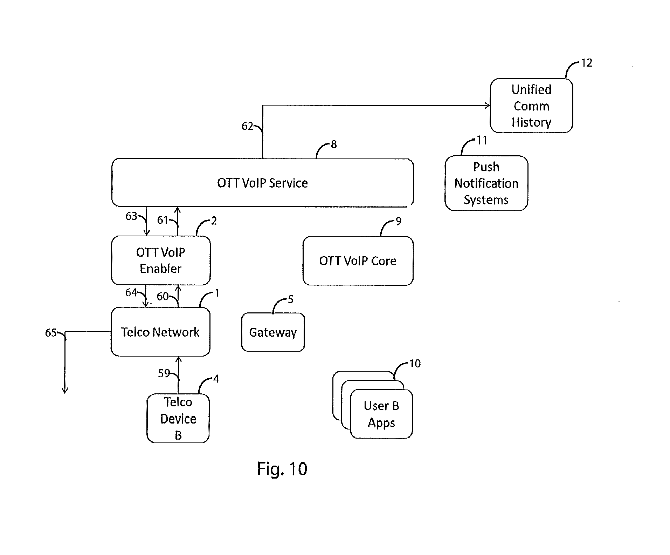

The procedure for handling outgoing SMS originated in the legacy device of the subscriber of the VoIP integration service is shown in figure 10:
- An OTT VoIP enabled user sends 59 an SMS from his legacy device 4.
- SMS is routed 60 to the OTT VoIP enabler 2.
- OTT VoIP enabler 2 notifies 61 OTT VoIP service 8 about the message.
- OTT VoIP service 8 includes 62 the message in the communication history 12 of the user.
- OTT VoIP service 8 detects that the message is an outgoing SMS and informs 63 the network 1 to let it progress.
- The network 1 is requested 64 to progress the SMS.
- SMS is delivered 65 to destination

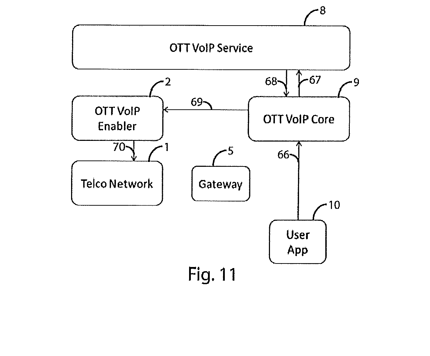

The data flow for outgoing messages from VoIP apps 10 is shown in figure 11:
- VoIP app 10 sends 66 a message request to the OTT VoIP core 9.
- Message request from the app 10 is notified 67 to the OTT VoIP service 8, which decides what the proper management for that message is.
- OTT VoIP service 8 requests 68 OTT VoIP core 9 to route the message to the network 1 using a notification API.
- The message is routed 69 through OTT VoIP enabler 2 to enforce operator policies and to execute any originating service of the calling user.
- OTT VoIP enabler 2 forwards 70 the message to the network 1 for it to be delivered by the network 1 by standard means.

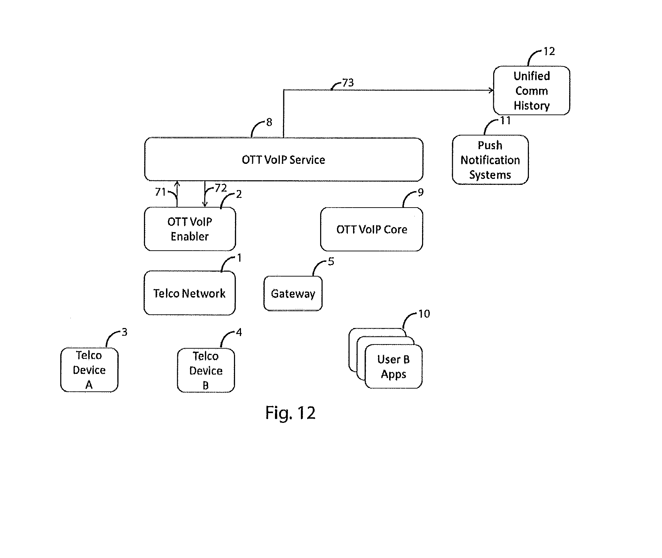

Since communications can be both originated and answered with both legacy device 4 and VoIP apps 10, using the same subscriber ID, a unified communication history 12 is preferably implemented. This unified communication history 12 comprises metadata of all the communications originated or handled by any device 4 or app 10 associated with the same user. Figure 12 shows an example of metadata insertion in the communication history 12:
- A call or SMS is finalized 71, and OTT VoIP enabler 2 notifies this finalization event 71 to the OTT VoIP service. The OTT VoIP service 8 acknowledges 72 the end of the communication.
- OTT VoIP service 8 includes 73 communication metadata in the communication history 12 using the corresponding API.

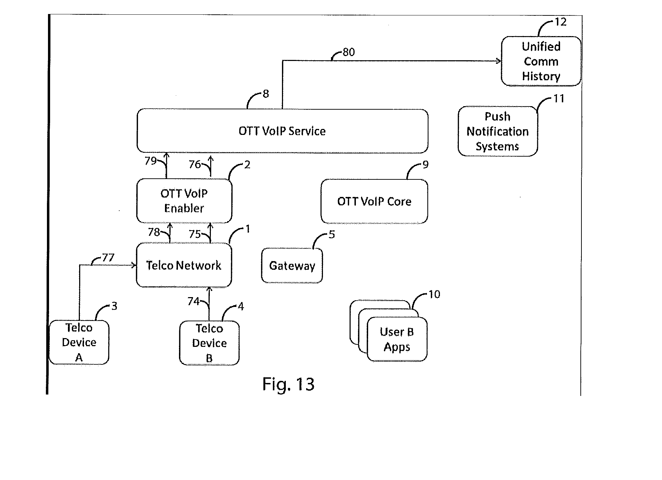

There are two additional communication scenarios that need to be considered in order for all the required data to be included in the communication history 12. Firstly, figure 13 shows the inclusion in the communication history 12 of legacy communications (SMS or phone calls) originated in legacy device 4 of the user:
- The first user 4 requests 74 to call the second user 3, which is a subscriber of the VoIP integration service.
- The network 1 triggers 75 the OTT VoIP enabler 2, for example by CAMEL IDP.
- The OTT VoIP enabler 2 notifies 76 the OTT VoIP service 8 about the call.
- The called user 4 answers the call and after some time, ends 77 the call.
- The OTT VoIP enabler 2 is notified 78 that the call has ended, for example by a CAMEL event report request.
- OTT VoIP service 8 is finally notified 79 of the end of the call.
- An entry is added 80 in the communication history 12 to record the metadata of the call.

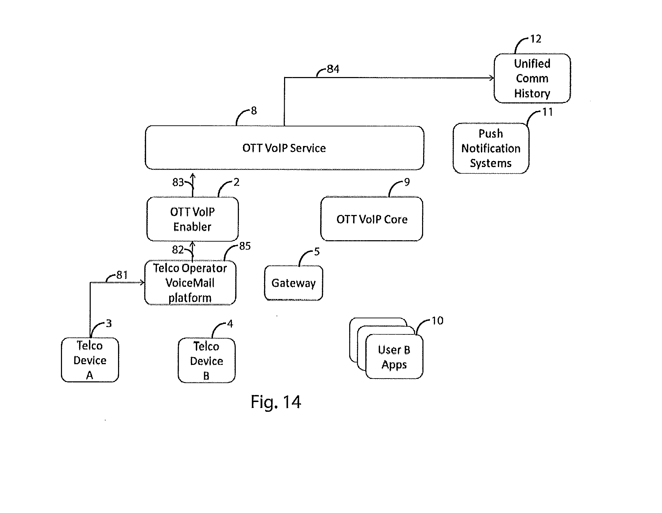

Secondly, figure 14 presents the inclusion in the communication history 12 of voicemails deposited in the user mailbox as a result of a missed or rejected call:
- A call to an OTT VoIP enabled user 4 is diverted 81 to a voicemail platform 85, and the caller deposits a message.
- Voicemail platform 85, by means of proprietary interface, notifies 82 OTT VoIP enabler 2 about the message.
- OTT VoIP enabler 2 uses a voicemail API to notify 83 OTT VoIP service 8. OTT VoIP enabler 2 adapts the proprietary voicemail interface to an OTT-like voicemail API. The audio file can either be included in the notification, or be stored in a link sent in said notification.
- OTT VoIP service 8 uploads 84 the voice message to the communication history 12.

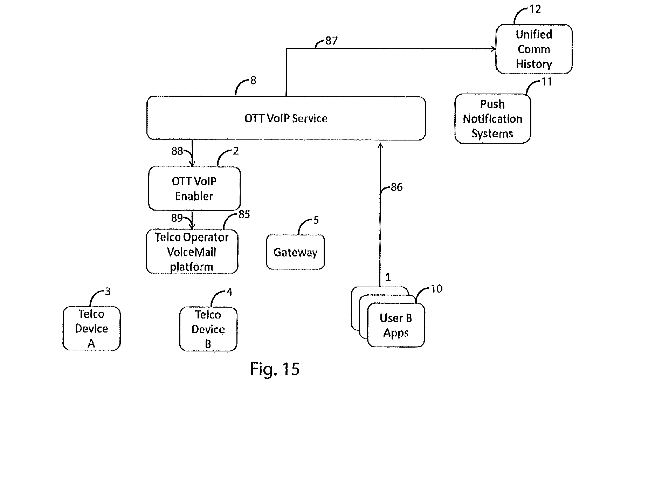

In case the user listens to or deletes a voice message stored in the communication history 12, said message needs to me mark as read in the communication history 12 so the status of the voice message can be replicated by all apps 10 and by the legacy operator voicemail platform 85. This process is shown in figure 15:
- User listens to the voicemail message in the OTT app 10, which requests 86 the message to be marked as read or deleted.
- OTT VoIP service 8 marks 87 the message as read or deleted in the communication history 12.

- Additionally, the message is marked 88 as read or deleted in the voicemail platform 85 using a voicemail API.
- The OTT VoIP enabler 2 is responsible of translating 89 the mark as read or deleted request of the voicemail API to the proprietary interface of the voicemail platform 85.

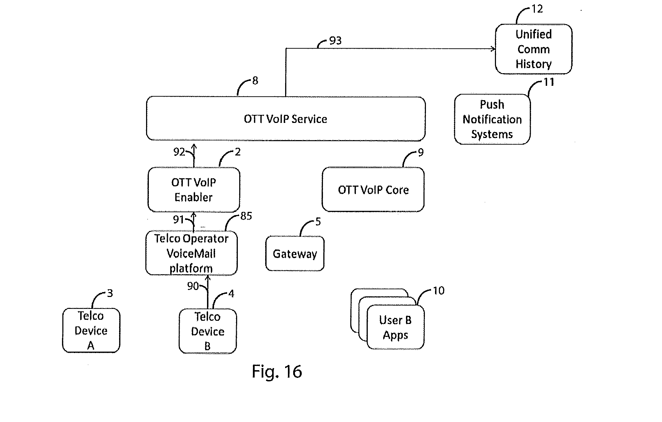

In the opposite direction, if the voicemail is read or deleted by the legacy device 4, the status of the voicemail is updated in the communication history 12, as shown in figure 16:
- The user accesses 90 the voicemail platform 85 to read or delete a voicemail.
- The voicemail platform 85 reads or deletes the message and notifies 91 the OTT VoIP enabler 2.
- The OTT VoIP enabler 2 reports 92 the message as read or deleted to the OTT VoIP service 8 using the voicemail API.
- OTT VoIP service 8 marks 93 as read or deleted the corresponding voicemail entry in the communication history 12.

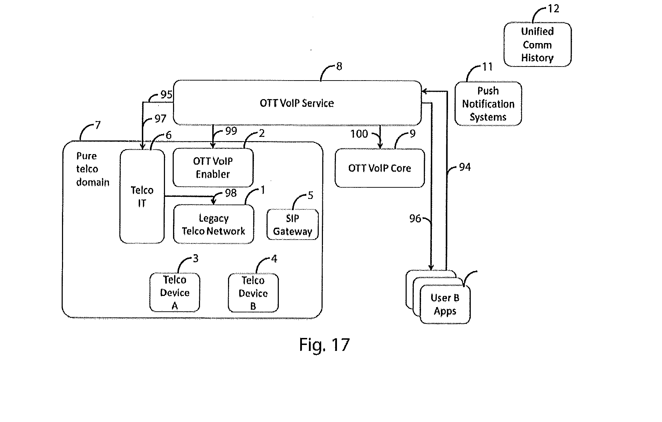

In order to allow the OTT VoIP service 8 to operate over user incoming and outgoing calls, messages and voicemails, these services need to be provisioned in the network 1. Figure 17 shows a preferred embodiment of the provisioning method:
- The process starts when the user downloads the corresponding VoIP app 10 and starts the registration process. The user provides 94 a MSISDN (Mobile Station International Subscriber Directory Number) as identifier. The MSISDN is a unique ID that can be managed in both VoIP and legacy domains.
- OTT VoIP service 8 checks 95 that the provided MSISDN belongs to a subscriber of the operator. This is done using a provisioning API provided by the legacy operator. The Provisioning API request contains the user MSISDN and a OTT VoIP service identifier that the operator assigned to OTT VoIP service 8 as a VAS in its network.
- If the user is a subscriber, a validation process 96 to ensure that the user owns the provided MSISDN is initiated. A typical authentication process can be based on a code sent over a legacy SMS addressed to the provided MSISDN. The user must then send the provided code to the OTT VoIP service 8 to complete the authentication.

- After authentication, OTT VoIP service 8 requests 97 the provisioning in the network 1 and its associated systems.
- The network operator is responsible for internally executing 98 a provisioning workflow in its IT systems 6 and for notifying the result of said provisioning. The workflow to be executed by the IT systems 6 is determined according to the OTT VoIP service identifier provided at step 95. The provision in the network 1 can be performed synchronously or asynchronously. When the provision process is finished, the operator uses a Notification API to inform about the result of the provision.

In more detail, the provisioning workflow is responsible for checking if the user is allowed to subscribe the OTT VoIP service 8, based on the user type, other services subscribed, etc. Once all the checks succeed, the following network provision is performed:
- Activating the corresponding service profile to trigger the OTT VoIP enabler 2 for calls and SMS. For example, this can be implemented by assigning a specific CAMEL subscription in HLR (Home Location Register) to trigger OTT VoIP enabler 2 for incoming and/or outgoing calls. Regarding SMS, the SMSC can be configured to forward incoming and outgoing user SMS to the OTT VoIP enabler 2.
- Configuring voicemail platform to notify OTT VoIP enabler 2 about any voicemail sent to the user.
- Depending on the user configuration, it could be necessary to disable conditional forwarding executed by the network 1.

Additionally, all OTT platforms required to provide the service are also provisioned:
- Subscriptions are created 99 in the OTT VoIP enabler 2, to enable the notification towards the OTT VoIP service 8 of events related to the user communications in the network 1. This allows the OTT VoIP service 8 to control communications in the legacy domain (Circuit Switched domain).
- Provision in the OTT VoIP core 9 creates 100 an account for the user to enable SIP registration. This allows the OTT VoIP service 8 to control communications in the internet domain (Packet Switched domain)

The involvement of OTT VoIP apps 10 in the communication flow arises two issues. First, a user can place and receive communications simultaneously in different apps 10 and legacy devices 4. Also, new race conditions appear as a result of handling simultaneously user reachability in both the legacy and OTT domains. To deal with these issues, a particular embodiment of the present invention is described, using a two-step forking process.

In the first forking step, incoming communications are forked between the SIP and legacy domains at the OTT VoIP enabler 2. That is, the OTT VoIP enabler 2 routes the communication towards the legacy device 4 through the legacy network 1, while simultaneously routing said communication towards the OTT VoIP core 9. This process is controlled by the OTT VoIP service 8, which has access to availability info in the SIP domain.

In the second forking step, OTT VoIP core 9 sends the communication individually to each app 10, again controlled by the OTT VoIP service 8. This two-step process simplifies the logic inside the network, as all apps 10 are handled (from the network perspective) as a single communication leg, while at the same time, a great control of the parallel ringing over the apps is performed. Also notice that the circuit switched leg creation is conditioned by the particular call handling procedure implemented at the OTT VoIP enabler 2.

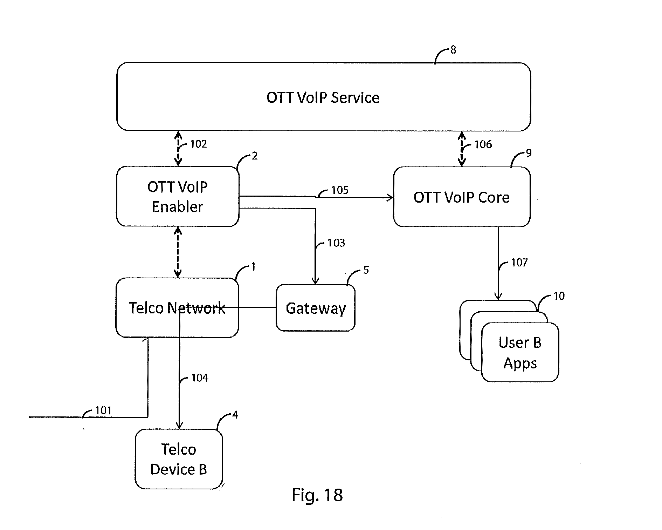

Figure 18 presents a schematic view of the described two-step forking process, comprising the following steps:
- Incoming call is received 101 at the legacy network for the OTT enabled user.
- OTT VoIP enabler 2 notifies 102 OTT VoIP service 8 about the incoming call. OTT VoIP service 8 does all availability 106 and configuration checking to decide if the call is to be routed to the legacy domain, the OTT VoIP domain, or both. In this example, both domains are reached.
- Two different legs are created (103, 105) in the OTT VoIP enabler 2 as a result of an API request from OTT VoIP service 8.
- A first leg is used to reach 104 the legacy device 4 of the user, as a regular legacy call.
- The second leg is created 105 to the OTT VoIP Core 9 in the VoIP domain.
- OTT VoIP service 8 gains control 106 over this second leg using a VoIP notification API provided by the OTT VoIP core 9.
- Using the VoIP API from OTT VoIP core 9, one or more VoIP legs are created 107 to reach user available apps 10.

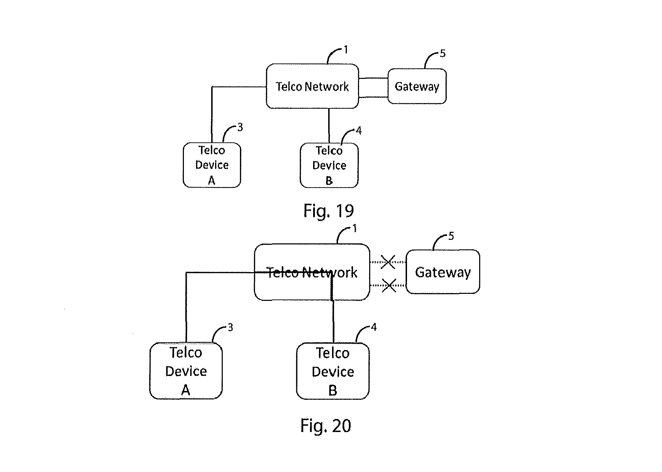

With the disclosed method and system, there is the possibility that an incoming communication is routed through the gateway 5 and back into the legacy network 1 and the legacy device 4, as shown in figure 19. This scenario, in which an unnecessary routing is performed, is called tromboning. In order to avoid this issue, In case no app availability, call is routed to legacy device directly in Telco Network, avoiding tromboning through Gateway.

In order to incorporate user preferences and app availability information into the communication handling the OTT VoIP service 8 can provide different routing instructions (routing through CS, routing through SIP or both), for different scenarios, such as: apps busy (with an ongoing communication or because the user rejects the call explicitly), available, or unavailable (not reachable); the characteristics of said apps or of the device where the App is installed (whether the device has legacy telephony features, such as an smartphone, or not); and/or user priorities and preferences (for example, if the user prefers to receive an incoming call in a smartphone in the VoIP App or in the legacy telephony application, when both options are available). Including different conditions based on the kind of electronic device in which the app is installed and the user preference, can help, for example, to prevent a smartphone from suspending a VoIP communication when a legacy call is received.

In a preferred embodiment, the following scenarios result in an incoming connection being routed through both CS (legacy) and SIP networks:
- There are available apps, at least one of the apps is not busy, and the service configuration indicates a priority towards CS.
- There are available apps that are not busy, but they are only conventional apps (not from a smartphone) and the service configuration indicates a priority towards SIP.

The following scenarios result in an incoming communication being routed only towards the SIP domain, and not towards the CS network:
- There are available smartphone apps (there can also be conventional apps), which are not busy, and the service configuration indicates a priority towards SIP.
- There are available apps (either smartphone, conventional or both), but said apps are busy.

If there are no available (reachable) apps, the communication progresses as a legacy communication only.

The routing instructions preferably ensure that, if a user has an ongoing call in an app, no new communication is routed to said app, to prevent the ongoing call from being dropped or suspended. Instead, if the app is busy, the call is routed through the legacy network 1 to the voicemail.

Also, it is possible to give the user the option to prioritize for example communication handling in the VoIP apps 10, delaying the creation of the legacy leg, so the communication is only routed to the legacy device 4 if said communication is not answered by the VoIP apps 10 in a given time.

Also notice that routing configuration can depend on the use of push notifications, for example considering as available all activated apps, since the push notification is received at the app regardless of its SIP registration status.

Additionally, for incoming calls, the system must identify various situations using SIP answers from available apps, including scenarios such as: the user answers the incoming call in the app, the app detecting that the user is busy on a legacy call in the device, the user is busy in another call in the app, and the user rejects the incoming call. OTT VoIP service 8 decides whether to progress the call to the legacy or OTT domains depending on these answers.

The described embodiments of the method and system solves all major disadvantages of other OTT VoIP approaches decoupled from the legacy network operator:
- A complete integration with the network is achieved, keeping service universality independently of available IP access.
- The service is bidirectional, and calls can use the user phone number regardless of the used device and applications.
- Intelligent call/message routing is provided, considering user availability, preferences, ongoing communications, etc.
- Features and SVAs provided to user by the legacy network operator are kept in the VoIP communications.
- VoIP charging can be executed in the communications Network in the same way as regular legacy calls and SMS.

## Claims

1. System of communication handling in a legacy communication network (1), wherein the network (1) comprises legacy connection means adapted to be connected to at least a legacy device (4) with legacy voice and data connectivity;
**characterized in that** the system further comprises:
- a Session Initiation Protocol gateway (5);
- communication handling means (2) comprising Voice over Internet Protocol connection means adapted to be connected to at least a Voice over Internet Protocol user device application (10); having both the at least one Voice over Internet Protocol user device application (10) and the at least one legacy device (4) a same subscriber identification;
**in that** the network (1) is configured to, when receiving an incoming communication routed towards the subscriber identification, routing the incoming communication to the communication handling means (2);
and **in that** the communication handling means (2) are configured to:
- routing the incoming communication to the at least one legacy device (4) through the legacy connection means of the network (1);
- and converting the incoming communication to a Session Initiation Protocol domain trough the Session Initiation Protocol gateway (5), and routing the converted incoming communications to the at least one Voice over Internet Protocol user device application (10) through the Voice over Internet Protocol connection means of the communication handling means (2).

2. System according to claim 1 **characterized in that** the communication handling means (2) are configured to route the converted incoming calls to a plurality of Voice over Internet Protocol user device applications (10) by:
- jointly routing the incoming call to the plurality of Voice over Internet Protocol user device applications (10) to a Voice over Internet Protocol core system (9);
- separately routing the incoming call to the plurality of Voice over Internet Protocol user device applications (10) at the Voice over Internet Protocol core system (9);
and to keep the communication data in the legacy network (1) if the communication is answered by the user in the at least one legacy device (4).

3. System according to any of the previous claims **characterized in that** the communication handling means (2) are configured to:
- being retriggered after incoming call conversion at the Session Initiation Protocol Gateway (5),
- adding a prefix to the incoming call to detect the communication handling means (2) being retriggered.

4. System according to any of the previous claims **characterized in that** the communication handling means (2) are configured to, when receiving an outgoing communication from the at least one Voice over Internet Protocol user device application (10), routing the outgoing communication through the network (1) enforcing same operator policies as from outgoing legacy communications.

5. System according to any of the previous claims **characterized in that** the network (1) is configured to: if after routing the incoming call to the at least one user Voice over Internet Protocol application (10), the incoming call is only handled by the at least one legacy device (4), then routing the incoming call directly to the legacy connection means of the network (1) without going through the communication handling means (2).

6. System according to any of the previous claims **characterized in that** the communication handling means(2) are further configured to:
- determining the availability of each Voice over Internet Protocol user device application (10);
- routing incoming communications to Voice over Internet Protocol user device applications (10) depending on ongoing communications, Voice over Internet Protocol user device applications (10) availability, device capabilities and user preferences;
- and determining routing paths and timings that avoid leg conflicts between routing to the at least one legacy device (4) and the Voice over Internet Protocol applications (10).

7. System according to any of the previous claims **characterized in that** the system further comprises a communication history (12), wherein the at least one Voice over Internet Protocol user device application (10) is configured to access the communication history (12) through a Voice over Internet Protocol service (8), being said Voice over Internet Protocol service (8) also configured to store in the communication history communication activity from the at least one legacy device (4).

8. System according to any of the previous claims **characterized in that** the system comprises a Voice over Internet protocol service (8) in a Voice over Internet Protocol domain, and provisioning means (6) in a legacy communication network (1) domain, wherein the Voice over Internet protocol service (8) and the provisioning means (6) are configured to perform a provisioning process, wherein said provisioning process combines a legacy communication network (1) domain and a Voice over Internet Protocol domain.

9. System according to any of the previous claims **characterized in that** the incoming communication is a Short Message Service communication, and **in that** the communication handling means (2) are configured to enable delivery of the Short Message Service in both the at least one legacy device (4) and the at least one Voice over Internet Protocol user application (10).

10. System according to claim 9 **characterized in that** the communication handling means (2) are configured to avoid delivering the Short Message Service communication more than once to the same physical device.

11. Method of communication handling in a legacy communication network (1), wherein the network (1) comprises legacy connection means adapted to be connected to at least a legacy device (4) with legacy voice and message connectivity; **characterized in that** the method comprises:
- when receiving at the network (1) an incoming communication routed either towards the at least one legacy device (4) or towards the Voice over Internet Protocol user device application (10), having both the at least one Voice over Internet Protocol user device application (10) and the at least one legacy device (4) a same subscriber identification; routing the incoming communication to communication handling means (2) comprising Voice over Internet Protocol connection means adapted to be connected to at least a Voice over Internet Protocol user device application (10);
- routing the incoming communication from the communication handling means (2) to the at least one legacy device (4) through the legacy connection means of the network (1);
- converting the incoming communication to a Session Initiation Protocol domain trough a Session Initiation Protocol gateway (5);
- and routing the converted incoming communications to the at least one Voice over Internet Protocol user device application (10) through the Voice over Internet Protocol connection means of the communication handling means (2).

12. Method according to claim 11 **characterized in that** it further comprises routing the converted incoming calls to a plurality of Voice over Internet Protocol user device applications (10) by:
- jointly routing the incoming call to the plurality of Voice over Internet Protocol user device applications (10) to a Voice over Internet Protocol core system (9);
- separately routing the incoming call to the plurality of Voice over Internet Protocol user device applications (10) at the Voice over Internet Protocol core system (9);
- and keeping the communication data in the legacy network (1) if the communication is answered by the user in the at least one legacy device (4).

13. Method according to any of claims 11 and 12 **characterized in that** it further comprises:
- retriggering the communication handling means (2) after incoming call conversion at the Session Initiation Protocol Gateway (5);
- and adding a prefix to the incoming call to detect the communication handling means (2) being retriggered.

14. Method according to any of claims 11 to 13 **characterized in that** it further comprises, when receiving an outgoing communication from the at least one Voice over Internet Protocol user device application (10), routing the outgoing communication through the network (1) enforcing same operator policies as from outgoing legacy communications.

15. Method according to any of claims 8 to 11 **characterized in that** it further comprises, if after routing the incoming call to the at least one user Voice over Internet Protocol application (10), the incoming call is handled only by the legacy device (4), then routing the incoming call directly to the legacy connection means of the network (1) without going through the communication handling means (2).

16. Method according to any of claims 11 to 15 **characterized in that** it further comprises:
- determining the availability of each Voice over Internet Protocol user device application (10);
- routing incoming communications to available Voice over Internet Protocol user device applications (10) depending on ongoing communications, Voice over Internet Protocol user device applications (10) availability, device capabilities and user preferences;
- and determining routing paths and timings that avoid leg conflicts between routing to the at least one legacy device (4) and the Voice over Internet Protocol applications (10).

17. Method according to any of claims 11 to 16 **characterized in that** the method further comprises the at least one Voice over Internet Protocol user device application (10) accessing a communication history (12) through a Voice over Internet Protocol service (8), being said Voice over Internet Protocol service (8) also configured to store in the communication history communication activity from the at least one legacy device (4)..

18. Method according to any of claims 11 to 17 **characterized in that** the system comprises performing a provisioning process, wherein said provisioning process combines is performed by means of a Voice over Internet protocol service (8) in a Voice over Internet Protocol domain, and provisioning means (6) in a legacy communication network (1) domain.

19. Method according to any of claims 11 to 18 **characterized in that** the incoming communication is a Short Message Service communication, and **in that** the method further comprises delivering the Short Message Service communication in both the at least one legacy device (4) and the at least one Voice over Internet Protocol user application (10).

20. Method according to claim 19 **characterized in that** the method further comprises avoiding delivering the Short Message Service communication more than once to the same physical device.
